# EUROPÄISCHE PATENTANMELDUNG

(11) **EP 0 862 889 A2**
(43) Veröffentlichungstag der Anmeldung: **09.09.1998**
(21) Anmeldenummer: 98102807.9
(22) Anmeldetag: 18.02.1998
(51) Int. Cl.: A47L 15/42

(54) **Wärmepumpe für eine Geschirrspülvorrichtung**

(30) Priorität: 24.02.1997 DE 19707287
(71) Anmelder: Premark FEG L.L.C., Wilmington, Delaware 19801 (US)
(72) Erfinder: Wörter, Markus, 77749 Hohberg (DE); Henninger, Herbert, 77749 Hohberg (DE)
(74) Vertreter: Füchsle, Klaus, Dipl.-Ing.

(57) **Zusammenfassung**

Eine Wärmepumpe für eine Geschirrspülvorrichtung zur Wärmenutzung der Abluft der Geschirrspülvorrichtung umfaßt zwei getrennte Kältekreisläufe mit jeweils einem ersten Wärmetauscher (16a, 16b) in Wärmeaustausch mit der Abluft der Geschirrspülvorrichtung. Der erste Kältekreislauf enthält mindestens einen zweiten Wärmetauscher (20, 24) im Wärmeaustausch mit Klarspülflüssigkeit der Geschirrspülvorrichtung. Der zweite Kältekreislauf besitzt mindestens einen dritten Wärmetauscher (22), der mit einer Tankheizung in einen Reinigungsflüssigkeitsbehälter der Geschirrspülvorrichtung verbunden ist.

## Beschreibung

### Technisches Gebiet

Die Erfindung betrifft eine Wärmepumpe für eine Geschirrspülvorrichtung zur Wärmenutzung der Abluft der Geschirrspülvorrichtung.

In Geschirrspülvorrichtungen werden nach dem Reinigen und Spülen der Geschirrteile diese unter Verwendung von Heißluft getrocknet. Die warme, feuchtebeladene Luft kann entweder direkt an die Umgebung abgeführt werden oder aber der Energieinhalt der Abluft in nachgeschalteten Wärmeaustauschschritten der Geschirrspülvorrichtung zurückgewonnen werden. Hierbei kann die gewonnene Wärme sowohl für das Beheizen des in der Geschirrspülvorrichtung aus den Spüldüsen austretenden Klarspülwassers verwendet werden, oder zusätzlich auch zur stationären Beheizung der Reinigerflotte.

### Stand der Technik

In der Technik ist die Verwendung einer Wärmepumpe zur Abwärmenutzung der Abluft der Geschirrspülvorrichtung bekannt. Hierbei wird ein geeignetes Kältemittel zwischen einem Kolbenkompressor und einem geeigneten Entspannungsorgan geführt, wobei im Niederdruckbereich ein Wärmeaustausch mit der Abluft der Geschirrspülvorrichtung und im Hochdruckbereich ein Wärmeaustausch mit einem zu erhitzenden Klarspülwasser stattfindet oder aber die Wärme zur Tankbeheizung einer Reinigerflotte eingesetzt wird.

Wenn die von der Abluft abgezogene Wärmemenge sowohl der Tankheizung eines Reinigerflottenbehälters der Geschirrspülvorrichtung als auch der Erhitzung einer Betriebsflüssigkeit, wie z.B. des für das Klarspülen verwendeten Wassers, eingesetzt wird, so ist die Wärmepumpe sehr schwer zu regeln, da nach einem Abschalten der Klarspülung dem Kältemittelkreislauf keine Wärme mehr entzogen wird. Hierbei kann es zu einer Hochdruckabschaltung der gesamten Wärmepumpe kommen. Dies hat nicht nur zur Folge, daß auch die ebenfalls an der Wärmepumpe angeschlossene Tankheizung ausfällt, sondern insbesondere auch, daß ein Abluftstrom mit einer unerwünscht hohen Temperatur in die Umgebung entlassen wird, bis das erneute Anfahren der Wärmepumpe abgeschlossen ist.

### Darstellung der Erfindung

Der Erfindung liegt die Aufgabe zugrunde, eine Wärmepumpe für eine Geschirrspülvorrichtung vorzuschlagen, die an verschiedene Betriebszustände der Geschirrspülvorrichtung variabel angepaßt werden kann.

Diese Aufgabe wird durch eine Wärmepumpe mit den Merkmalen des Anspruchs 1 gelöst.

Der Erfindung liegt der Gedanke zugrunde, daß durch das Vorsehen zweier getrennter Kältekreisläufe in der Wärmepumpe die Warmwasseraufbereitung und die Tankheizung eines Reinigerflottenbehälters der Vorrichtung voneinander entkoppelt werden können. Dies bietet gegenüber dem oben beschriebenen Stand der Technik den Vorteil, daß beim Abschalten der Nachspülung der entsprechende Kältekreislauf mit dem Wärmeaustauscher zur Erwärmung der Nachspülflüssigkeit abgeschaltet werden kann und der zweite Kältekreis unbeeinflußt weiterläuft, bis die gewünschte Tanktemperatur erreicht ist. Durch die Verwendung von zwei Kältekreisen sind die eingebauten Kälteleistungen und die Geräte kleiner, wodurch sich zudem die Gesamtkosten der Wärmepumpe reduzieren lassen.

Bevorzugte Ausführungsformen sind durch die übrigen Ansprüche gekennzeichnet.

Nach einer bevorzugten Ausführungsform besitzen der erste Kältekreislauf und der zweite Kältekreislauf jeweils einen Kompressor und ein Expansionsorgan und sind die Kompressoren als Scroll-Kompressoren ausgeführt. Im Vergleich zu Kolbenkompressoren besitzen Scroll-Kompressoren ein deutlich geringeres Gewicht. Zudem sind die Kosten wesentlich geringer. Da Scroll-Kompressoren flüssigkeitsunempfindlich sind, muß im Kältekreislauf keine Sumpfheizung und auch kein Flüssigkeitsabscheider den Kompressoren vorgeschaltet werden. Schließlich ist der Wirkungsgrad von Scroll-Kompressoren besser als derjenige von Kolbenkompressoren.

Vorzugsweise umfaßt der zweite Kältekreislauf zusätzlich einen vierten Wärmetauscher im Wärmeaustausch mit der Reinigungs- oder Spülflüssigkeit. Dieser zusätzliche Wärmeaustauscher, der im zweiten Kältekreislauf dem dritten Wärmetauscher nachgeschaltet ist, in dem eine Kondensation des Kältemittels stattfindet, führt zu einer Unterkühlung des Kältemittels. Hierdurch wird sichergestellt, daß es nicht im Kältekreislauf nachfolgend dem Kondensator wieder zu einer teilweisen oder vollständigen Verdampfung des Kältemittels aufgrund des Druckabfalles in der Kühlmittelleitung kommt, wodurch das Expansionsorgan geschädigt würde. Zudem läßt sich durch diese Maßnahme der Gesamtwirkungsgrad der Wärmepumpe steigern.

Vorzugsweise ist der dritte Wärmetauscher im zweiten Kältekreislauf als Plattenwärmetauscher ausgeführt, der direkt im Reinigerflottentank angeordnet ist. Dieser dritte Wärmetauscher, in dem das Kältemittel kondensiert wird, benötigt keine gesonderten Umwälzleitungen zum Kondensator, die leicht verstopfen können.

Nach einer bevorzugten Ausführungsform wird im ersten Kältekreislauf sowie im zweiten Kältekreislauf jeweils ein Kältemittel mit hoher Kondensationstemperatur verwendet. Hierdurch wird bei den erreichbaren Kältemitteltemperaturen beim Austritt aus den Wärmetauschern und vor Eintritt in das Expansionsorgan sichergestellt, daß sich das Kältemittel in kondensiertem Zustand bzw. unterkühltem Zustand befindet. Zudem kann die Kondensationswärme auf einem hohen Temperaturniveau abgegeben werden.

Nach einer bevorzugten Ausgestaltung der Erfindung sind der erste Kältekreislauf und der zweite Kältekreislauf unabhängig voneinander betreibbar. Mittels zweier getrennt arbeitender Abluftventilatoren wird der Abluftstrom der Geschirrspülvorrichtung so bewegt, daß nur der erste Wärmetauscher des zweiten Kältekreislaufs durchströmt wird. Durch das Abschalten eines Abluftventilators kann der erste Wärmetauscher des ersten Kältekreislaufs abgekoppelt werden, wenn aufgrund des Abschaltens der Nachspülung und Waschung nur der zweite Kältekreislauf in Betrieb ist. Hierdurch geht die vorhandene Abwärme des Abluftstromes nicht ungenutzt verloren, sondern wird jeweils demjenigen Wärmeaustauscher zugeführt, der diese für die Geschirrspülvorrichtung nutzbar macht.

Nach einer alternativen, bevorzugten Ausgestaltung der Erfindung sind der erste Kältekreislauf und der zweite Kältekreislauf unabhängig voneinander betreibbar und eine Klappe im Abluftstrom der Geschirrspülvorrichtung so bewegbar, daß nur der erste Wärmetauscher des zweiten Kältekreislaufs durchströmt wird. Durch das gezielte Bewegen einer Klappe im Abluftstrom kann der erste Wärmetauscher des ersten Kältekreislaufs abgekoppelt werden, wenn aufgrund des Abschaltens der Nachspülung und Waschung nur der zweite Kältekreislauf in Betrieb ist. Das Vorsehen einer bewegbaren Klappe stellt somit eine Alternative zu dem Betrieb von zwei getrennt arbeitenden Abluftventilatoren dar.

Vorzugsweise ist die Reinigungs- oder Spülflüssigkeit zusätzlich mit mindestens einem fünften Wärmetauscher in Wärmeaustausch mit der Abluft der Geschirrspülvorrichtung verbunden. Dieser fünfte Wäremaustauscher ist somit nicht in einen der Kältekreisläufe eingebunden, da die beim Trocknungsvorgang einer Geschirrspülvorrichtung anfallende Abluft eine ausreichend hohe Temperatur besitzt, um ohne die Verwendung einer Wärmepumpe direkt für die Erwärmung von Flüssigkeit einer geringen Temperatur eingesetzt zu werden. Hierdurch wird zum einen die in der Wärmepumpe zu übertragende Wärmemenge verringert, wodurch die Wärmepumpe kleiner dimensioniert werden kann und zum anderen läßt sich die Wärmepumpe leicht in einem bestehenden System nachrüsten, das die fünften Wärmeaustauscher bereits fest installiert in der Vorrichtung besitzt.

Nach einer bevorzugten Ausführungsform wird die Klarspülflüssigkeit stromabwärts des zweiten Wärmetauschers einem Erhitzer zugeführt, der mit einer Einrichtung zum Erfassen des Füllstandes versehen ist. In dem Erhitzer wird die verbleibende Temperaturdifferenz zwischen der Temperatur der Klarspülflüssigkeit nach dem Durchlaufen der Wärmeaustauscher und der gewünschten Temperatur beim Austritt aus Klarspüldüsen in der Geschirrspülvorrichtung durch eine elektrische, geregelte Heizung überbrückt. Hierdurch wird sichergestellt, daß die Klarspülflüssigkeit mit exakt der gewünschten Temperatur in der Geschirrspülvorrichtung bereitsteht. Zudem lassen sich durch das Volumen des Erhitzers und die Einrichtung zum Erfassen des Füllstandes Betriebsschwankungen bei der Klarspülflüssigkeitserwärmung ausgleichen, wodurch ein möglichst kontinuierlicher Betrieb des ersten Kältekreislaufes der Wärmepumpe sichergestellt wird.

### Kurze Beschreibung der Zeichnung

Nachfolgend wird die Erfindung rein beispielhaft anhand der beigefügten Zeichnung beschrieben, welche die Wärmepumpe mit getrennten Kältekreisen als schematisches Fließdiagramm wiedergibt.

### Weg zur Ausführung der Erfindung

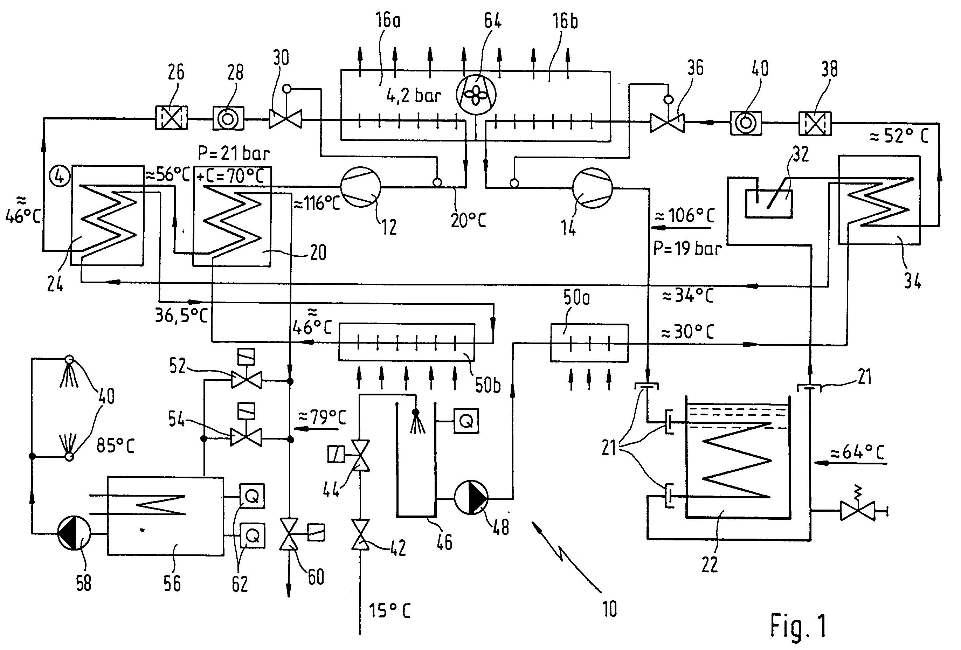

Fig. 1 zeigt die erfindungsgemäße Wärmepumpe für eine Geschirrspülvorrichtung zur Wärmenutzung der Abluft der Geschirrspülvorrichtung, die allgemein mit Referenzziffer 10 bezeichnet ist. Die gesamte Vorrichtung 10 besteht im vorliegenden Ausführungsbeispiel aus zwei getrennten Kältemittelkreisläufen sowie der Führung einer Frischwassererwärmung.

Das Kernstück des ersten Kältemittelkreislaufes stellt der erste Kompressor 12 und das Kernstück des zweiten Kältemittelkreislaufs der zweite Kompressor 14 dar. Hierbei können beliebige Kompressoren zur Anwendung gelangen, welche die erwünschten Leistungen erzeugen können. Es hat sich als besonders vorteilhaft erwiesen, Scroll-Kompressoren einzusetzen. Gegenüber Kolbenkompressoren oder Halbhermetik-Kompressoren ist das Gewicht, sind aber auch die Anschaffungskosten von Scroll-Kompressoren wesentlich geringer. Der Hauptvorteil der Scroll-Kompressoren gegenüber herkömmlichen Kolbenkompressoren liegt jedoch darin, daß diese flüssigkeitsunempfindlich sind, so daß keine Sumpfheizung und kein Flüssigkeitsabscheider erforderlich sind. Schließlich besitzen die totraumfreien Scroll-Kompressoren einen höheren Wirkungsgrad als Kolbenkompressoren, wodurch der Gesamtenergiebedarf der Wärmepumpe verringert werden kann.

Wendet man sich nun dem ersten Kältekreislauf mit dem ersten Kompressor 12 zu, so wird das Kältemittel im ersten Kältekreis durch den ersten Kompressor 12 verdichtet. Bei der Verwendung des Kältemittels R 134a erhöht sich hierbei durch den Joule-Thompson-Effekt die Temperatur des Kältemittels. Sowohl in Strömungsrichtung vor, als auch hinter dem ersten Kompressor befinden sich Drucksensoren und Druckschalter, um den ordnungsgemäßen Betrieb des ersten Kompressors 12 zu überprüfen und zu regeln.

Vor dem Eintritt in den Kompressor 12 durchläuft das Kältemittel einen ersten Wärmeaustauscher 16a, in dem das Kältemittel im Wärmeaustausch mit dem abzukühlenden Abluftstrom der Geschirrspülvorrichtung steht. Nach dem Austritt aus dem ersten Kompressor 12 wird das Kältemittel einem zweiten Wärmetauscher 20 zugeführt, der vorzugsweise als Plattenwärmetauscher ausgeführt ist. Im Plattenwärmetauscher 20 wird der Kältemittelstrom gekühlt und kondensiert. Am Austritt aus dem Plattenwärmetauscher 20 ist das Kältemittel unterkühlt. Die übertragene Wärmemenge wird an das zu erhitzende Frischwasser abgeführt, wie später eingehender erläutert wird. Im vorliegenden Beispiel beträgt die übertragene Leistung im Plattenwärmetauscher 20 ca. 12 kW. Nach dem Austritt aus dem Plattenwärmetauscher 20 wird das Kältemittel einem weiteren Wärmetauscher 24 zugeführt, in dem unter Abgabe einer Leistung von etwa 0,9 kW das Kältemittel weiter unterkühlt wird.

Anschließend wird das Kältemittel durch einen Trockner 26 geführt, der beispielsweise mit festen Adsorbentien gefüllt ist und Wasser, das sich möglicherweise im Kältemittelkreislauf befindet, bindet. Ein nachgeschaltetes Schauglas 28 kann mit einem Stoff gefüllt sein, der bei Anwesenheit von Wasser einen Farbumschlag zeigt und somit den Zeitpunkt angibt, zu dem der Trockner 26 regeneriert werden muß bzw. die Füllung des Trockners 26 ausgetauscht werden muß. Im nachgeschalteten Expansionsventil 30 wird das Kältemittel entspannt, wobei durch den Joule-Thompson-Effekt sich das Kältemittel stark abkühlt. Anschließend wird das Kältemittel wieder in den bereits oben beschriebenen ersten Wärmetauscher 16a geführt, in welchem das Kältemittel verdampft und Wärme von dem die Geschirrspülvorrichtung anschließend verlassenden Abluftstrom aufnimmt.

Der zweite Kältemittelkreislauf wird im vorliegenden Beispiel ebenfalls mit dem Kältemittel R 134a betrieben, jedoch kann selbstverständlich auch für die beiden Kältekreisläufe ein unterschiedliches Kältemittel eingesetzt werden.

Nach dem Durchlaufen des ersten Wärmetauschers 16b, der als Verdampfer für das Kältemittel mit einer Siedetemperatur von ca. 10 °C ausgelegt ist, verläßt das Kältemittel den ersten Wärmetauscher 16b. Im zweiten Kompressor 14 wird das Kältemittel verdichtet, wobei sich die Temperatur erhöht. In Strömungsrichtung vor und nach dem zweiten Kompressor sind ebenfalls Drucksensoren sowie Hochdruckschalter und Hochdruck-Niederdruckschalter, die in Fig. 1 nicht dargestellt sind, angeordnet.

Der Kältemittelstrom gelangt anschließend in den dritten Wärmetauscher 22 im zweiten Kältekreislauf. Hierbei handelt es sich um einen Kondensator, in dem das Kältemittel R 134a mit einem Massenstrom von 260 kg/h eine Leistung von 13,3 kW abgibt. Im vorliegenden Ausführungsbeispiel dient der zweite Wärmetauscher 22 der Tankbeheizung und gibt die von dem Kältemittelstrom abgegebene Wärmemenge an geeignete Heizelemente ab, die in einem Reinigerflüssigkeitsbehälter der Geschirrspülvorrichtung angeordnet sind. Der Wärmetauscher 22 wird mittels Trennkupplungen 21 an den Kompressor bzw. einen nachgeschalteten Kältemittelsammler 32 angeschlossen, so daß das Hauptaggregat und der Wärmetauscher 22 der Tankbeheizung getrennt evakuiert und mit Kältemittel gefüllt werden können. Der Kühlmittelstrom verläßt daraufhin den dritten Wärmetauscher 22 und gelangt unter Zwischenschaltung des Kältemittelsammlers 32, der als Puffer für das Kältemittel dient, in einen vierten Wärmetauscher 34, der als Plattenwärmetauscher ausgelegt ist und der Unterkühlung des Kältemittelstromes dient. Durch die Unterkühlung des Kältemittelstromes wird sichergestellt, daß sich nach dem Kondensator 22 (dritter Wärmetauscher) durch einen Druckverlust im Leitungssystem des zweiten Kältemittelkreislaufs kein Zustand einstellen kann, in dem das Kältemittel wieder teilweise verdampft. Verdampfungsvorgänge im Kältemittel können zu unerwünschten Rückschlageffekten in dem Expansionsventil 36 führen, das, wie bereits anhand des ersten Kältemittelkreislaufs erläutert wurde, einem Trockner 38 sowie einem Schauglas 40 nachgeschaltet im Strömungskreislauf des Kältemittels angeordnet ist. Im Expansionsventil 36 wird das Kältemittel entspannt und tritt anschließend in den ersten Wärmetauscher 16b ein, in dem das Kältemittel wieder unter Aufnahme von Wärme verdampft wird.

Der vierte Wärmetauscher 34 des zweiten Kältemittelkreislaufs gibt die bei der Unterkühlung des Kältemittels übertragene Leistung von etwa 1,5 kW an die Nachspülflüssigkeit ab, deren Erwärmung in den verschiedenen Wärmeaustauschern der Vorrichtung 10 nachfolgend beschrieben wird. Die Nachspülflüssigkeit dient dem letzten Spülen der in der Geschirrspülvorrichtung zu reinigenden Geschirr- und/oder Tabletteile vor dem Eintreten in eine Trocknungszone. Hierbei wird reines Leitungswasser verwendet, das dem Leitungsnetz mit einer Temperatur von etwa 15 °C entnommen wird. Im vorliegenden Beispiel soll ein Massenstrom von etwa 320 kg/h Wasser auf eine Temperatur von 85 °C erhitzt werden, mit der das Wasser aus den Frischwasserklarspüldüsen 40 der Geschirrspülvorrichtung austritt. Das dem Leitungsnetz entnommene Wasser wird über einen Mengenregler 42 dosiert und nach dem Durchströmen eines Magnetventils 44 einem Behälter 46 zugeführt, der sowohl als Pufferbehälter, als auch als Air-Gap zum Trennen des Brauchwasserkreislaufes vom Leitungswasserkreislauf dient. Nach dem Austritt aus dem Behälter 46, der mit einer Füllstandsregelung versehen ist, die betriebsmäßig mit dem Magnetventil 44 gekoppelt ist, wird das Wasser mit einer Pumpe 48 auf den gewünschten Druck gebracht und strömt anschließend durch einen fünften Wärmeaustauscher 50a, in dem das Wasser durch den Abluftstrom der Geschirrspülvorrichtung in direktem Wärmeaustausch erwärmt wird.

In dem Wärmeaustauscher 50a macht man sich den Umstand zunutze, daß in diesem Bereich eine natürliche Temperaturdifferenz zwischen dem abzukühlenden Abluftstrom und dem zu erwärmenden Strom an Wasser besteht und somit die Wärme direkt, d.h. ohne Zwischenschaltung eines Wärmepumpenkreislaufes, übertragen werden kann.

Nach dem Austritt aus dem fünften Wärmetauscher 50a tritt das zu erwärmende Wasser in den vierten Wärmeaustauscher 34 ein, der als Plattenwärmetauscher ausgeführt ist und in dem das Wasser weiter erwärmt wird, wobei im Gegenzug, wie oben erwähnt wurde, das Kältemittel im zweiten Kältemittelkreislauf unterkühlt wird.

Anschließend wird das zu erwärmende Wasser dem Wärmetauscher 24 im ersten Kühlmittelkreislauf zugeführt, der ebenfalls als Plattenwärmetauscher aufgebaut ist. Im Wärmetauscher 24 wird der Wasserstrom erwärmt, wobei der Strom an Kältemittel im ersten Kältekreislauf im Wärmetauscher 24 unterkühlt wird.

Nachfolgend wird das zu erwärmende Wasser in den fünften Wärmeaustauscher 50b geführt, in dem, vergleichbar dem Wärmeaustauscher 50a, das zu erwärmende Wasser in direktem Wärmeaustausch mit dem aus der Geschirrspülvorrichtung abgeführten Abluftstrom tritt. Im Wärmetauscher 50b wird der zu erwärmende Wasserstrom erwärmt und tritt anschließend in den zweiten Wärmetauscher 20 im ersten Kühlmittelkreislauf ein, in dem, wie oben erläutert wurde, das Kältemittel kondensiert wird. Im Wärmeaustauscher 20, der als Plattenwärmetauscher ausgeführt ist, wird das Wasser auf eine Temperatur von etwa 78 bis 82 °C erhitzt.

Abschließend wird das Wasser durch die parallel geschalteten Magnetventile 52 und 54 einem Erhitzer 56 zugeführt, der dem Wasser eine zusätzliche Heizleistung zuführt. Nach dem Austritt aus dem Erhitzer 56 wird das nunmehr auf eine Temperatur von 85 °C erhitzte Wasser mittels einer Pumpe 58 den Frischwasserklarspüldüsen 40 mit dem gewünschten Druck zugeführt.

Neben dem Zuführen des Wassers zu dem Erhitzer 56 besteht auch die Möglichkeit, das erhitzte Wasser durch Öffnen eines Bypass-Magnetventils 60 zu einem anderen Ort in der Geschirrspülvorrichtung zu fördern. Dies kann beispielsweise die Vorspülzone einer Durchlaufgeschirrspülvorrichtung sein, die mit einem Auffangbehälter versehen ist, aus der die Betriebsflüssigkeit aus der Vorrichtung abgeführt wird.

Der Erhitzer 56 ist mit Füllstandssensoren in Form von Schwimmerschaltern 62 versehen, durch die sichergestellt wird, daß sich der Füllstand im Erhitzer 56 immer in einem vorgegebenen Bereich befindet. In ähnlicher Weise ist der Erhitzer 56 vorzugsweise mit einem Temperatursensor versehen.

Im vorliegenden Beispiel beträgt die Luftmenge etwa 1.200 m³/h, die den fünften Wärmetauschern 50a und 50b zugeführt wird. Durch die schematisch gezeigte Größe der Wärmeaustauscher 50a und 50b in Fig. 1 soll angedeutet werden, daß der Wärmeaustauscher 50b eine größere Wärmeaustauschfläche besitzt und dementsprechend mit einem größeren Teilvolumenstrom an Abluft beaufschlagt wird. Nach dem Durchströmen der fünften Wärmeaustauscher 50a und 50b gelangt die Luft zu den ersten Wärmeaustauschern 16a des ersten Kältekreislaufes sowie 16b des zweiten Kältekreislaufes. In diesen Wärmeaustauschern 16a und 16b wird die Luft auf eine Temperatur von etwa 18 °C abgekühlt und durch das Zumischen von Raumluft auf eine relative Feuchte von etwa 95 % gebracht. Anschließend wird die Abluft mittels des Ventilators 64 an die Umgebung abgegeben.

Während vorstehend beide Kältekreise in Betrieb und ebenso die Frischwasserklarspüldüsen 40 in Betrieb dargestellt wurden, soll im folgenden der Betrieb der Anlage für den Fall betrachtet werden, daß das Frischwasserklarspülen und somit der Austritt von Wasser aus den Frischwasserklarspüldüsen 40 abgeschaltet wird. Nachdem die Pumpe 58 angehalten wird, steigt der Füllstand im Erhitzer 56 an, bis der Schwimmerschalter 62 anspricht und über eine Regeleinrichtung die Zufuhr von Leitungswasser durch die Ventile 52 und 54 durch Schließen derselben unterbrochen wird. Handelt es sich nur um eine vorübergehende, kurze Abschaltung des Frischwasseraustritts aus den Düsen 40, so kann das Ventil 60 geöffnet werden und bei einer fortdauernden Erhitzung des Wassers im oben beschriebenen Prozeß das erhitzte Wasser über die an das Magnetventil 60 angeschlossene Bypaßleitung in geeigneter Weise in die Geschirrspülvorrichtung zurückgeführt oder dem Abwasser beigegeben werden.

Handelt es sich jedoch nicht um eine vorübergehende, kurzzeitige Unterbrechung des Betriebs der Frischwasserklarspüldüsen, so wird der erste Kompressor 12 angehalten und somit die Zirkulation des Kältemittels im ersten Kältemittelkreislauf gestoppt. Um gleichzeitig zu verhindern, daß die Abluft weiterhin den ersten Wärmetauscher 16a durchströmt und, ohne ausreichend abgekühlt worden zu sein, an die Umgebung abgegeben wird, wird der dazugehörige Abluftventilator 64b abgeschaltet und die im Luftstrom nachgeschaltete Jalousie 65 geschlossen, so daß die abzukühlende Abluft vollständig durch den ersten Wärmetauscher 16b des zweiten Kühlmittelkreislauf gelenkt wird, der unabhängig vom Betrieb des Wasch- oder Spülteils und somit des Betriebs des ersten Kältekreises weiter arbeitet, bis die gewünschte Tanktemperatur erreicht ist. Somit wird im Falle einer Unterbrechung des Betriebs der Klarspülung durch das Abschalten des ersten Kühlmittelkreislaufes sowie durch das Lenken der Luft durch den ersten Wärmetauscher 16b des zweiten Kühlmittelkreislaufes die gesamte Primärenergie der Tankheizung der Vorrichtung zugeführt und somit eine bestmögliche Energieausnutzung erreicht.

Das Vorsehen der getrennten, parallel geschalteten Ventile 52 und 54 gestattet es, daß die Vorrichtung sehr variabel gesteuert wird. So können beispielsweise die parallel geschalteten Ventile 52 und 54 so betrieben werden, daß unabhängig von den Ein/Aus-Befehlen eines ersten Schwimmerschalters 62 das Ventil 52 mit einer geringen Durchflußmenge immer geöffnet bleibt, damit es im ersten Kältemittelkreislauf nicht zu einer unzureichenden Abfuhr der Wärme an das Wasser und somit zu einem automatischen Abschalten des ersten Kältekreises kommt. Erst wenn ein zweiter Schwimmerschalter 62 anspricht, der den maximal tolerierbaren Füllstand im oben offenen Erhitzer 56 darstellt, wird entweder der erste Kühlkreislauf durch Abschalten des ersten Kompressors 12 stillgelegt oder aber vorübergehend das Bypassventil 60 geöffnet und das erhitzte Wasser ungenutzt abgeführt.

Die Wärmepumpe gemäß der Erfindung erlaubt einen sehr variablen Betrieb der gesamten Vorrichtung, wobei die Primärenergie der Abluft in bestmöglicher Weise ausgenutzt wird. Durch die beiden getrennten Kältekreise läßt sich die Wärmepumpe sehr gezielt steuern und je nach Betriebszustand der Geschirrspülvorrichtung die zurückgewonnene Wärmemenge entweder nur der Tankheizung oder dem zu erhitzenden Wasser oder aber zur Durchführung beider Maßnahmen gleichzeitig einsetzen. Durch das Vorsehen einer variablen Ventilsteuerung kann der erste Kühlmittelkreislauf unmittelbar nach dem Abschalten der Frischwasserklarspülung, aber auch zeitversetzt abgeschaltet werden. Die Verwendung von Scroll-Kompressoren gestattet es des weiteren, die Wärmepumpe sehr kompakt auszuführen, so daß die gesamte Vorrichtung leicht transportiert und in bereits bestehenden Geschirrspülvorrichtungen nachgerüstet werden kann.

## Patentansprüche

1. Wärmepumpe für eine Geschirrspülvorrichtung zur Abwärmenutzung der Abluft der Geschirrspülvorrichtung, umfassend:
- zwei getrennte Kältekreisläufe mit jeweils einem ersten Wärmetauscher (16a, 16b) in Wärmeaustausch mit der Abluft der Geschirrspülvorrichtung; wobei
- der erste Kältekreislauf mindestens einen zweiten Wärmetauscher (20, 24) in Wärmeaustausch mit einem Klarspülwasser der Geschirrspülvorrichtung enthält; und
- der zweite Kältekreislauf mindestens einen dritten Wärmetauscher (22) besitzt, der mit einer Tankheizung in einem Reinigungsflüssigkeitsauffangbehälter der Geschirrspülvorrichtung betriebsmäßig verbunden ist.

2. Wärmepumpe nach Anspruch 1,
dadurch **gekennzeichnet,** daß
der erste Kältekreislauf und der zweite Kältekreislauf jeweils einen Kompressor (12, 14) und ein Expansionsorgan (30, 36) besitzen.

3. Wärmepumpe nach Anspruch 2,
dadurch **gekennzeichnet,** daß
die Kompressoren (12, 14) des ersten Kältekreislaufs und des zweiten Kältekreislaufs als Scroll-Kompressoren ausgeführt sind.

4. Wärmepumpe nach einem der vorhergehenden Ansprüche,
dadurch **gekennzeichnet,** daß
der zweite Kältekreislauf zusätzlich umfaßt:
- einen vierten Wärmetauscher (34) in Wärmetausch mit dem Klarspülwasser.

5. Wärmepumpe nach einem der vorhergehenden Ansprüche,
dadurch **gekennzeichnet,** daß
der dritte Wärmetauscher im zweiten Kältekreislauf als Plattenwärmetauscher ausgeführt ist, der direkt im Reinigungsflüssigkeitsauffangbehälter angeordnet ist.

6. Wärmepumpe nach einem der vorhergehenden Ansprüche,
dadurch **gekennzeichnet,** daß
im ersten Kältekreislauf sowie im zweiten Kältekreislauf jeweils ein Kältemittel mit hoher Kondensationstemperatur, vorzugsweise R 134a, verwendet wird.

7. Wärmepumpe nach einem der vorhergehenden Ansprüche,
dadurch **gekennzeichnet,** daß
- der erste Kältekreislauf und der zweite Kältekreislauf unabhängig voneinander betreibbar sind; und je einen Abluftventilator besitzen; und
- der erste Ventilator mit einer Jalousie ausgerüstet ist, so daß bei geschlossener Jalousie nur der erste Wärmetauscher (16b) des zweiten Kältekreislaufs durchströmt wird.

8. Wärmepumpe nach einem der Ansprüche 1 bis 6,
dadurch **gekennzeichnet,** daß
- der erste Kältekreislauf und der zweite Kältekreislauf unabhängig voneinander betreibbar sind; und
- eine Klappe im Abluftstrom der Geschirrspülvorrichtung so bewegbar ist, daß nur der erste Wärmetauscher (16b) des zweiten Kältekreislaufs durchströmt wird.

9. Wärmepumpe nach einem der vorhergehenden Ansprüche,
dadurch **gekennzeichnet,** daß
das Klarspülwasser zusätzlich mit mindestens einem fünften Wärmetauscher (50a, 50b) in Wärmetausch mit der Abluft der Geschirrspülvorrichtung verbunden ist.

10. Wärmepumpe nach einem der Ansprüche 1 bis 9,
dadurch **gekennzeichnet,** daß
das Klarspülwasser stromabwärts des zweiten Wärmetauschers (20, 24) einem Erhitzer (56) zugeführt wird, der mit einer Einrichtung zum Erfassen des Füllstands (62) versehen ist.
